Europäisches Patentamt

(19) European Patent Office

Office européen des brevets

(11) Publication number: **0 104 953**
**A2**

(12) # EUROPEAN PATENT APPLICATION

(21) Application number: **83305835.7**

(22) Date of filing: **28.09.83**

(51) Int. Cl.³: **B 65 G 39/02**

(30) Priority: **28.09.82 US 426112**

(43) Date of publication of application:
**04.04.84 Bulletin 84/14**

(84) Designated Contracting States:
**AT BE CH DE FR GB IT LI NL SE**

(71) Applicant: **KORNYLAK CORPORATION**
**400 Heaton Street**
**Hamilton, OH 45011(US)**

(72) Inventor: **Kornylak, Andrew T.**
**325 North C Street**
**Hamilton Ohio 45013(US)**

(74) Representative: **Purvis, William Michael Cameron et al,**
**D. Young & Co. 10 Staple Inn**
**London WC1V 7RD(GB)**

(54) Conveyor rollers and conveyors incorporating such rollers.

(57) A conveyor roller for a gravity rollerway conveyor has a resilient tyre and a low friction bearing. Resilient tyres (13) are selected for various properties desired for the overall conveyor and are permanently preassembled on metallic cylindrical tubes (12) for stockpiling, so that thereafter they may be selected for a particular job and each mechanically force fitted onto the outer race of a standard wheel subassembly (5) that includes a bearing. In this manner, the secure assembly of the tyre can be accomplished without contaminating or deteriorating the bearing or other parts of the wheel subassembly (5).

FIG. 5

1

## "CONVEYOR ROLLERS AND CONVEYORS INCORPORATING SUCH ROLLERS"

The invention relates to resilient tyred conveyor rollers and to conveyors incorporating such rollers.

Conveyor rollers of the kind to which the invention relates are particularly though not exclusively suitable for use in gravity rollerway conveyors.

In United States Patent No. 3 621 960, November 23, 1971, entitled "Conveyor With Rollers Having Tires of High-Hysteresis Material", a gravity rollerway conveyor is disclosed, and the complete disclosure thereof is incorporated herein by reference.

It has been found that several problems occur relating to manufacturing procedure and to the wide variety of roller designs needed to satisfy the market.

It is important that the bond between a roller tyre and the remainder of the roller formed by a wheel will not fail in service. The correction of such a failure usually involves expense far in excess of the total equipment sale price and great inconenience to the customer since the usually perishable inventory stored in a rack must be removed and extensive disassembly is necessary before rollers can be removed and replaced. The manufacturing procedure needed for obtaining the required bond quality between the wheel and the tyre involves solvent cleaning of the wheel to remove surface oil and other contaminants, followed by sand blasting or wire brushing, coating the surface with a primer, then a coat of adhesive and finally moulding on the tyre. The tyre is then heat cured. The steps of solvent cleaning can remove oil from the wheel bearing and may damage the bearing seal if one is used. Sand blasting can destroy the bearing and even if proper shielding is used, the fine grit which permeates the plant environment is a source of bearing damage. The heat needed to dry the coatings and to cure the tyre deteriorates rubber or plastic bearing seals and affects the bearing lubricant.

The final product has a diversity of applications. One such diversity is in temperature of the environment, including -42°C. for a freezer, -2°C.

for a meat cooler, and a range of +10°C. to +37°C. for an industrial warehouse. Since no economic tyre composition has yet been found to meet all these conditions, it has been necessary to produce a minimum of three compositions.

Another diversity relates to load capacity to support the variety of loads ranging from appliances weighing 220 kg to air cargo loads weighing 37,500 pounds. While this diversity is primarily accommodated by utilizing a larger number of wheels under the load, the risk of a load concentration on a single wheel caused by load surface irregularities requires that the individual wheels be matched to the load. Heretofore this has been accomplished by increasing the size of the wheel in order to provide a wider rim for a wider tyre. Since the inadequacy is not in the bearing capacity, this is an expensive solution.

Yet another diversity involves the proper matching of hysteresis value to the application. Presently wheels are manufactured with either low hysteresis or high hysteresis tyres. There is also a choice of hysteresis tyres for controlling load speed on a sloping conveyor or non-hysteresis tyres when loads are to be pushed along a level conveyor. Such a choice of tyre would greatly differ from the choice of tyre for another environment, such as in a manufacturing plant wherein the environment temperature is quite high and hot articles must be moved along such a conveyor.

It is evident that this diversification calls for a larger and more expensive inventory. The cost is further increased by taxes levied on inventory.

Besides temperature and hysteresis need, other characteristics of the conveyor environment may be controlling with respect to the choice of tyre, for example, the resilient properties or the hysteresis properties of the tyre may primarily be chosen in accordance with the weight of the articles being conveyed, which can differ greatly between boxes of empty bottles on one hand and loaded pallets of machinery on the other hand. Choice of tyre hardness also varies to accommodate non-uniformity of load surface.

Further, when shipping wheels overseas, it is necessary to pay duty on the product. As will be explained later, the new invention can reduce this duty to approximately one-half. As a further complication, some countries will not permit import of the product, claiming that it is essentially a bearing or wheel which can be produced locally, overlooking the technology of the tyre manufacture. This invention permits import of only the high technology tyre for assembly with domestically produced wheels.

The result of these requirements is that a large stock of rollers must be manufactured and stored in complete form including an axle, an anti-friction bearing having an inner race, an outer race, and antifriction roller elements, and a tyre permanently assembled as a unit. As in the above-mentioned patent, some of these elements may be in one piece with each other, that is, the shaft and inner race in one piece, whereas other elements may, in fact, be split into multiple pieces, such as in the patent wherein the outer race is, in fact, split into two portions secured by means of rivets. In any event, the basic elements exist. Therefore, the expected differing requirements for the resilient tyre necessitate the stockpiling of a great quantity of entire roller assemblies, which creates an expensive inventory.

There are advantages to permanently bonding the resilient tyre to a rigid substrate, which would include the prevention of heat build-up due to movement between the tyre inner surface and the substrate outer surface, the prevention of the tyre walking around the surface of the substrate, the axial movement of the tyre off of the substrate, etc., when the tyre is in use and further the stress analysis radially through the tyre is different between a tyre that is bonded and one that is unbonded. Therefore, there are many practial reasons why it is desired and sometimes necessary to bond the resilient tyre to a rigid substrate in this environment.

In the past, almost $100,000 in expenses has been incurred by the Applicant of the present invention as a result of faulty adhesion of tyres on the outer periphery of rollers having roller bearings. This is a significant amount for the Applicant, a small business with about 100 employees, and the manufacture of rollers is only a small part of such business.

According to one aspect of the invention there is provided a conveyor roller comprising:

an outer annular elastomeric tyre at least partly extending radially outwardly beyond the remainder of the roller to provide a load engaging surface for the conveyor, with said tyre having an outer peripheral surface and an inner peripheral cylindrical surface; and with

said roller having a generally tubular, rigid, cylindrical rim supportingly engaging and being permanently bonded concentrically within said annular tyre to said inner peripheral surface; characterised in that

said bonded tyre and rim form a tyre subassembly;

said roller includes a wheel subassembly comprising an inner race, means for mounting said inner race, an outer race concentrically mounted about said inner race, and bearing means between said inner and outer races;

said outer race has an outer peripheral cylindrical surface of a normal diameter which is generally the same as or greater than the normal internal diameter of said tyre subassembly when said tyre assembly is separate and apart from said wheel subassembly and under the same environmental conditions for purposes of reference;

said tyre subassembly is concentrically telescopically mounted on said wheel subassembly with the tyre subassembly inner cylindrical surface securely bonded to and/or frictionally engaging the outer cylindrical surface of the wheel subassembly and thereby providing the means supporting said tyre subassembly on said wheel subassembly and preventing relative rotation therebetween; and

where there is a difference in normal diameters, the difference provides means for elastic deformation of said subassemblies so that said tyre subassembly is under tension and said wheel subassembly is under compression to provide an interference fit therebetween.

According to another aspect of the invention there is provided a set of conveyor rollers characterised in that it comprises:

a first set of a plurality of identical tyre subassemblies, a first set of a plurality of identical wheel subassemblies, and at least a second set of one of said tyre and wheel subassemblies that are identical with themselves and differ from the corresponding first set of subassemblies in structure that produces a different conveyor roller characteristic than the corresponding first set; wherein

each of said tyre subassemblies has an outer annular elastomeric tyre at least partly extending radially outwardly beyond the remainder of the tyre subassembly to provide a load engaging surface for the conveyor, with each of said annular tyres having an outer peripheral surface and an inner peripheral cylindrical surface;

each of said tyre subassemblies further has a general tubular, rigid, cylindrical rim supportingly engaging and being permanently bonded concentrically within said annular tyre to said inner peripheral surface; each of said wheel subassemblies comprises an inner race, means for mounting said inner race, an outer race concentrically mounted about said inner race, and bearing means between said inner and outer races;

each outer race has an outer peripheral cylindrical surface of a common identical normal diameter which is generally the same as or greater than the normal inner diameter of each of said tyre subassemblies when said tyre subassemblies are separate and apart from said wheel subassemblies and under the same environmental conditions for purposes of reference;

said common cylindrical outer diameters for said wheel subassemblies, said common cylindrical inner diameters for said tyre subassemblies and said difference, where provided, in normal diameters between said wheel subassemblies and said tyre subassemblies enables concentric telescopic mounting selectively of any one of said corresponding first and second subassemblies on any one of said remaining first subassemblies with the rim inner cylindrical surface bonded to or frictionally engaging the outer cylindrical surface of the wheel subassembly and providing means supporting the tyre subassembly on said wheel subassembly and preventing relative rotation therebetween; and

said difference in normal diameters where provided provides means for elastic deformation of said mounted subassemblies so that said tyre subassembly would be under tension and said wheel subassembly would be under compression to provide an interference fit therebetween when mounted.

The invention can improve quality assurance, reduce manufacturing costs and taxes, reduce inventory requirements, offer simplified diversity, reduce overseas sales costs and overcome foreign trade restrictions. It can also allow greater freedom in choice of substrate material for the inner rim of the tyre. In addition, replacement of damaged wheels can be accomplished by removing the tyre subassembly and pressing a new tyre on the old wheel, a saving of approximately half.

In manufacturing and marketing a roller and rollerway conveyor such as disclosed in the above-mentioned U.S.A. patent, a number of problems have been encountered, recognized and analyzed, as follows:

(1)     The bonding between the resilient tyre and the rigid substrate has not always been satisfactory due to contamination, for example, lubricating oil or grease required in the antifriction bearing or necessary manufacturing oil required in the assembly or manufacture of the roller subassembly being present on the substrate surface prior to bonding. Various methods for reliably removing such contaminates from the substrate surface prior to bonding have their own problems, for example, solvents used to clean the surface may also remove the oil from the bearing or damage the seal for the bearing to greatly shorten the life of the bearing, or grit blasting and grinding performed on the wheel to remove the contaminate would, in a significant number of cases, damage the bearing.

(2)    It very often happens that troubles develop with the bond between the tyre and the rim either in manufacture or in usage, and, at present, it is usually required to throw away or sacrifice the costly roller, because it can be too expensive to cut off the old tyre and prepare the substrate surface for further bonding of a new tyre.

(3)    While there are considerable advantages to using hysteresis or different property elastomeric tyres, the duty to be paid where exporting an entire assembled roller may make it noncompetitive with a product producted in the receiving country, and the prior art bonding methods required such complete assembly of the roller and did not facilitate assembly of the tyre produced in the United States on a roller produced in another country.

(4)    The inventory of rollers to be carried for future assembly in specific rollerway conveyor or guide units can be quite expensive when taking into consideration complete roller assemblies with bonded tyres having widely differing properties of hysteresis and elasticity for different ultimate environments.

(5)    Load rating in the past has been limited by the tyre capacity, not by the bearing capacity and standardized wheel subassemblies with bearings have a limited standardized outer surface for bonding of a tyre in accordance with conventional techniques that thereby limit the load capacity of the assembly to far below the rating of the actual bearing.

(6)    There is a compromise in metal qualities between those best suited for the purposes of providing an outer race and those properties best suited for supporting, or bonding, the tyre or for other needs.

These problems as analyzed above can be solved by separate manufacture of the wheel subassembly to include inner race, antifriction roller elements, outer race and variations of these basic elements, to be thereafter force fit assembled with a tyre subassembly when needed, which tyre subassembly includes an elastomeric annular tyre permanently bonded onto a rigid metal or high tensile modulus substrate, all of which can solve the problems, respectively, as follows:

(1)    The substrate of the tyre subassembly, rim, preferably a metallic cylindrical tube, can be easily processed by solvents, grit blasting, or grinding, or the like independently and removed from the bearing to best prepare its outer surface for bonding with a resilient tyre and, thereafter, the rim preferably immediately bonded to the resilient tyre without intervening manufacturing steps related to some other portion of the roller, such as assembling of the bearing, that might contaminate the now clean surface. That is, the tyre subassembly including the tyre bonded on a rim can be completed independently and apart from the wheel subassembly that includes the bearing.

(2)    If trouble develops with the bond or properties of the tyre, the tyre subassembly may be easily pushed off or disassembled from the wheel subassembly and a new tyre subassembly assembled, with little loss of time or materials, in the use of unskilled labour without extensive special purpose tools.

(3)    Tyre subassemblies may be manufactured for specific applications and shipped overseas with minimum duty to be thereafter assembled on standardized wheel subassemblies competitively with products produced abroad.

(4)    The inventory becomes less expensive and less in both quantity and weight since only a wide variety of tyre subassemblies need be inventoried for use with a small inventory of common standardized wheel subassemblies, which is particularly important considering the high cost of the wheel subassemblies, particularly caused by the antifriction bearing.

(5)    Standardized wheel subassemblies that include the bearing have a fixed width for their outer surface and can be used to mount tyre subassemblies of greater width for specific applications to thereby increase the load carrying capacity of the tyre, within the limits of the usually greater load carrying capacity of the bearing.

(6)    The sleeve tube or rim of the tyre subassembly may be constructed of a material specifically suited for its purpose without having to compromise for the needs of the wheel subassembly bearing. For example, it may be constructed of steel, plated steel, aluminium, brass, or even a synthetic resin or plastic material.

The invention is diagrammatically illustrated by way of example in the accompanying drawing, in which:-

Figure 1 is a top plan view of a rollerway conveyor, such as a gravity rollerway conveyor, of the kind to which the invention can be applied;

Figure 2 is an enlarged side elevation view of a roller for a conveyor according to the invention;

Figure 3 is a cross-sectional view of a bearing subassembly taken on line A-A of Figure 2;

Figure 4 is a cross-sectional view of a tyre subassembly taken in a plane parallel to the plane of Figure 2;

Figure 5 is a partial cross-sectional view of the roller, taken on line A-A of Figure 2;

Figure 6 is a view similar to Figure 5, but including a different tyre subassembly; and

Figure 7 is a cross-sectional view of a modified tyre subassembly taken in a plance parallel to the plane of Figure 2.

In this application, including the claims, the term "interference fit" means that an unassembled rim has an internal diameter less than the external diameter of an outer race that it will engage when assembled when all other conditions are equal, such as equal temperature, and that as assembled the only securement between them will be the frictional forces of the peripherally engaging surfaces that are resiliently and radially pressed together by the inherent resiliency of the materials.

The assembly is by elastic deformation of the materials through such assembly processes as prestressing of either the inner or outer part, or both, by heat differential (for example a shrink fit), mechanical flexing, elastic joining or snap fit, or by a driven force fit. This frictional engagement alone will be sufficient to maintain the assembly unitary for the purposes of conveying without relative movement between the outer race and tyre rim.

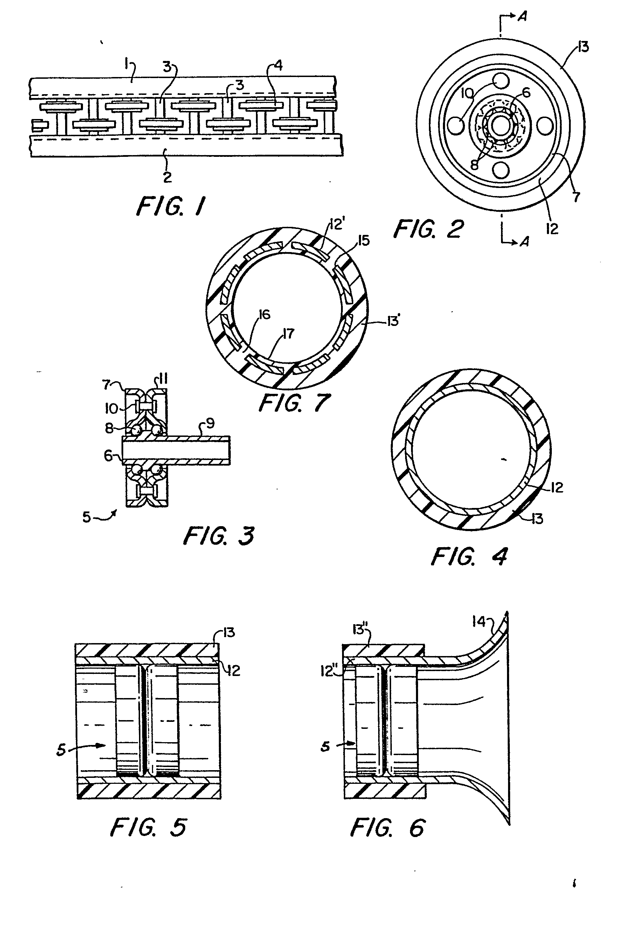

As shown in Figure 1, a rollerway conveyor has a plurality of rollers mounted between parallel rails 1 and 2 on a corresponding plurality of parallel axles 3, with a roller 4 on each axle 3. Thereby, the rollers 4 are mounted for rotation about parallel axes, which axes are in a common plane. The plane of the axes may be horizontal for a transfer table, vertical for a side supporting conveyor, or inclined in a conveying direction for an undriven gravity conveyor, for example. Thereby, the rollers 4 form an

outer support plane parallel to the plane of the axes, which support plane coincides with an outermost portion of each roller 4.

Each roller 4 comprises a wheel subassembly 5, for example as shown in Figure 3 and a tyre subassembly, for example as shown in Figure 4. In Figures 3 and 4, the subassemblies are shown separately.

The wheel subassembly 5 as shown in Figure 3 comprises three basic elements, an inner race 6, an outer race 7, and a plurality of antifriction roller elements 8 therebetween. Each of these elements may take on various forms in accordance with the present invention. The inner race 6 may include a shaft 9 that is in one piece with the inner race as shown or separate and drivingly secured thereby (not shown). The outer race 7 may comprise a plurality of separate elements as shown or be constructed in one piece (not shown). The roller elements 8 may be balls, as shown, or cylindrical rollers (not shown). For the specific embodiment shown, the outer race 7 comprises formed sheet metal portions that are rigidly joined together by rivets 10. The inner race 6 and outer race 7 are formed with opposing annular bearing surfaces forming a raceway therebetween to accommodate the antifriction roller elements 8 to form an antifriction bearing. This structure is more fully shown in the above-mentioned U.S.A. patent. The outer race includes an outer, generally cylindrical surface 11.

The tyre subassembly includes a cylindrical rim 12 that has an inner cylindrical surface and an outer cylindrical surface. A cylindrical elastomeric tyre 13 has an inner cylindrical surface bonded to the outer cylindrical surface of the rim 12. The bonding may be by means of self adhesion, vulcanizing, the application of adhesives, or the application of solvents. In any event, the tyre 13 is permanently bonded to the outer surface of the rim 12 so as to prevent relative rotation between the two. The elastomeric tyre 12 may have its hardness, elasticity, hysteresis properties, etc., chosen according to its purpose and the environment in which it is to be used and in accordance with the loads it is to support. A plurality of such tyre subassemblies may be stockpiled with many different types being stockpiled in accordance with the above characteristics that may be desired.

As shown in Figures 3 and 4, the outer diameter of the surface 11 for the wheel subassembly 5 is greater than the inner diameter of the tyre subassembly when the subassemblies are separate from each other and under the same environmental conditions, for example, at the same temperature. The wheel subassemblies 5 are kept in inventory as common to all tyre subassemblies, that is all wheel subassemblies 5 will be identical to each other and common to a plurality of different types of tyre subassemblies. Also, it is possible to provide a plurality of different wheel subassemblies 5, for example, that differ in bearing load capabilities or shaft configuration, which, in turn, may be interchangeable with a plurality of different types of the tyre subassemblies. The critical feature is that all of the tyre subassemblies have substantially the same inner diameter, that all of the wheel subassemblies 5 have substantially the same outer diameter, and that the outer diameter of the wheel subassemblies 5 be larger than the inner diameter of the tyre subassemblies, so as to provide for an interference fit as defined above. Interference fit is the most economic and convenient method, but cementing can also be used, in which case the inner diameter of the tyre subassembly is generally the same as the outer diameter of the wheel subassembly 5.

The assembly process may be by cooling the wheel subassembly 5 and/or heating the tyre subassembly prior to assembly, so that after assembly the two subassemblies may reach the same temperature and provide for the interference fit. Also, a suitable press may be used for the assembly for a force fit. In any event, the only means holding the tyre subassembly on the wheel subassembly 5 is the frictional engagement between the wheel subassembly 5 outer surface 11 and the inner surface of the rim 12 as caused by the inherent resiliency of the subassemblies that will cause radial forces that are perpendicular to the engaging surfaces, that is the tyre subassembly will be in tension and the wheel subassembly 5 will be in compression as a result of the interference fit when assembled.

In general, the limiting factor for a load carrying capacity in the past has been the load carrying capacity of the elastomeric tyre and the anti-friction bearing has had a load carrying capacity many times greater. With the present invention, when it is desired to have a high load capacity roller, a tyre subassembly may be selected of a far greater width axially measured than the wheel subassembly 5, so that the load carrying capacity of the elastomeric tyre may then be greater or even approximately equal the load carrying capacity of the bearing, for example, as shown in Figure 5. This is in contrast to the usual construction wherein the width of the tyre subassembly (not shown) is equal to or less than the width of the wheel subassembly 5 of Figure 3.

A further modification is contemplated in accordance with Figure 6, wherein the rim 12" may be extended outwardly in one axial direction and then flared or bent radially outwardly beyond the elastomeric tyre 13" and axially spaced therefrom. With such a construction, a support surface of horizontal axis rollers could support articles and engage the sides of the articles with the flared portions 14 to maintain the articles on the rollers. Two flights of such rollers could be provided for supporting pallets, for example, and each flight could have a plurality of its rollers constructed in accordance with Figure 6, with the flared portions respectively towards the outside to prevent the pallets from moving laterally with respect to the conveyor that is moving in an axial direction with respect to the roller axes. Thereby, it is seen that the present invention affords the possibility of providing a wide variety of tyre subassemblies with differing characteristics and functions that may be quickly and easily assembled on common standardized wheel subassemblies 5 without the disadvantages mentioned above.

Another modification of the tyre subassembly is shown in Figure 7. The rim 12' is constructed of a permeable material, such as wire mesh, which may be woven or braided or felted (non-woven) fabric in a tubular form. This porous design allows the elastomer to penetrate the fabric and form an improved bond. It is possible to thus construct the tyre subassembly by cutting off axial lengths of desired length (width of the tyre subassembly) from a moulded tube. Specifically shown is a thin metal rim 12' substantially identical to the metal rim 12 of Figure 4, but with a plurality of holes or apertures 15 extending through it in the radial direction. Thus, when the elastomer is moulded to form the tyre 13', portions of the elastomer 16 extend through the holes 15. Preferably, the elastomer extends through the holes 15 to enter into the interior of the rim 12' against a moulding mandrel to form a thin layer or portions 17 of elastomeric material with a cylindrical inner surface. This layer or the portions 17 of elastomeric material inside of the rim will provide a better bond for the tyre and rim, but more importantly, will also compensate for variations in diameters of the wheel subassembly 5 and variations of the diameter of rim interior surface, to form an improved press or interference fit.

It is possible to have a kit of parts for forming conveyor rollers comprising:

a first set of a plurality of identical tyre subassemblies, a first set of a plurality of identical wheel subassemblies, and at least a second set of one of said tyre and wheel subassemblies that are identical with themselves and differ from the corresponding first set of subassemblies in structure that produces a different conveyor roller characteristic than the corresponding first set; wherein

each of said tyre subassemblies has an outer annular elastomeric tyre at least partly extending radially outwardly beyond the remainder of the tyre subassembly to provide the load engaging surface for the conveyor, with each of said annular tyres having an outer peripheral surface and an inner peripheral cylindrical surface;

each of said tyre subassemblies further has a general tubular, rigid, cylindrical rim supportingly engaging and being permanently bonded concentrically within said annular tyre to said inner peripheral surface;

each of said wheel subassemblies comprises an inner race, means for mounting said inner race, an outer race concentrically mounted about said inner race, and bearing means between said inner and outer races;

each outer race has an outer peripheral cylindrical surface of a common identical normal diameter which is generally the same as or greater than the normal interior diameter of each of said tyre subassemblies when separate and apart from said wheel subassemblies and under the same environmental conditions for purposes of references; and

each of said tyre subassemblies can be concentrically telescopically mounted on a corresponding wheel subassembly with the tyre subassembly inner cylindrical surface securely bonded to or frictionally engaged with the outer cylindrical surface of the wheel subassembly thereby to provide means supporting the tyre subassembly on said wheel subassembly and preventing relative rotation therebetween.

In such a kit, said corresponding first and second subassemblies can be tyre subassemblies differing from each other in at least the axially measured width of both their rims and tyres, with the greater width tyre subassembly having a width substantially greater than the corresponding width of the wheel assemblies of said first set of wheel assemblies.

The corresponding first and second subassemblies can be tyre subassemblies different from each other at least in that said first set of tyre subassemblies has a rim consisting of a single diameter tube and said second set of tyre subassemblies has rims that extend axially outwardly away from their associated tyres and then radially outwardly to an annular guide portion that extends radially outwardly beyond said tyres for guiding the edges of articles supported on said tyres.

The corresponding first and second set of subassemblies can be tyre subassemblies differing in at least the elastomeric characteristics of their tyres.

The difference in elastomeric characteristics can relate to a difference in hysteresis properties of the elastomeric tyres.

The corresponding first and second subassemblies can be wheel subassemblies differing in bearing structure.

## CLAIMS

1.    A conveyor roller comprising:

an outer annular elastomeric tyre at least partly extending radially outwardly beyond the remainder of the roller to provide a load engaging surface for the conveyor, with said tyre having an outer peripheral surface and an inner peripheral cylindrical surface; and with

said roller having a generally tubular, rigid, cylindrical rim supportingly engaging and being permanently bonded concentrically within said annular tyre to said inner peripheral surface; characterised in that

said bonded tyre (13) and rim (12) form a tyre subassembly;

said roller includes a wheel subassembly (5) comprising an inner race (6), means (9) for mounting said inner race (6), an outer race (7) concentrically mounted about said inner race (6), and bearing means (8) between said inner (6) and outer (7) races;

said outer race (7) has an outer peripheral cylindrical surface (11) of a normal diameter which is generally the same as or greater than the normal internal diameter of said tyre subassembly when said tyre assembly is separate and apart from said wheel subassembly (5) and under the same environmental conditions for purposes of reference;

said tyre subassembly is concentrically telescopically mounted on said wheel subassembly (5) with the tyre subassembly inner cylindrical surface securely bonded to and/or frictionally engaging the outer cylindrical surface (11) of the wheel subassembly (5) and thereby providing the means supporting said tyre subassembly on said wheel subassembly (5) and preventing relative rotation therebetween; and

where there is a difference in normal diameters, the difference provides means for elastic deformation of said subassemblies so that said tyre subassembly is under tension and said wheel subassembly (5) is under compression to provide an interference fit therebetween.

2.    A conveyor roller according to claim 1, characterised in that said tyre subassembly is of a substantially greater width than said outer race.

3.     A conveyor roller according to claim 1, characterised in that said rim (12") extends axially outwardly away from its associated tyre (13") and then radially outwardly to an annular guide portion (14) that extends radially outwardly beyond said tyre (13") for guiding the edges of articles supported on said tyre (13") during conveying.

4.     A conveyor roller according to any one of claims 1 to 3, characterised in that the rim (12') is constructd of porous material having a plurality of holes (15) extending radially therethrough, and the elastomeric material of said elastomeric tyre (13') extends through said holes (15) to improve the bond between the rim (12') and the tyre (13').

5.     A conveyor roller according to claim 4, characterised in that the rim (13') is wire or fibre mesh.

6.     A conveyor roller according to claim 4, characterised in that said elastomeric material extends inwardly beyond said rim (12') to form an interior thin layer (17) of elastomeric material between said rim (12') and wheel subassembly (5) when assembled.

7.     A rollerway conveyor characterised in that it comprises:
a support; and
a plurality of substantially identical conveyor rollers according to any one of claims 1 to 6 and mounted on said support with generally parallel axes of rotation, lying in a common plane, and aligned with respect to the conveying direction that is perpendicular to the roller axes.

8.     A set of conveyor rollers characterised in that it comprises:
a first set of a plurality of identical tyre subassemblies, a first set of a plurality of identical wheel subassemblies (5), and at least a second set of one of said tyre and wheel subassemblies (5) that are identical with themselves and differ from the corresponding first set of subassemblies in structure that produces a different conveyor roller characteristic than the corresponding first set; wherein
each of said tyre subassemblies has an outer annular elastomeric tyre (13) at least partly extending radially outwardly beyond the remainder of the tyre subassembly to provide a load engaging surface for the conveyor, with each of said annular tyres having an outer peripheral surface and an inner peripheral cylindrical surface;

each of said tyre subassemblies further has a general tubular, rigid, cylindrical rim (12) supportingly engaging and being permanently bonded concentrically within said annular tyre to said inner peripheral surface;

each of said wheel subassemblies (5) comprises an inner race (6), means (9) for mounting said inner race, an outer race (7) concentrically mounted about said inner race (6), and bearing means (8) between said inner (6) and outer (7) races;

each outer race (7) has an outer peripheral cylindrical surface (11) of a common identical normal diameter which is generally the same as or greater than the normal inner diameter of each of said tyre subassemblies when said tyre subassemblies are separate and apart from said wheel subassemblies (5) and under the same environmental conditions for purposes of reference;

said common cylindrical outer diameters for said wheel subassemblies (5), said common cylindrical inner diameters for said tyre subassemblies and said difference, where provided, in normal diameters between said wheel subassemblies (5) and said tyre subassemblies enables concentric telescopic mounting selectively of any one of said corresponding first and second subassemblies on any one of said remaining first subassemblies with the rim inner cylindrical surface bonded to or frictionally engaging the outer cylindrical surface of the wheel subassembly (5) and providing means supporting the tyre subassembly on said wheel subassembly (5) and preventing relative rotation therebetween; and

said difference in normal diameters where provided provides means for elastic deformation of said mounted subassemblies so that said tyre subassembly would be under tension and said wheel subassembly would be under compression to provide an interference fit therebetween when mounted.

9. A set of conveyor rollers according to claim 8, characterised in that said corresponding first and second subassemblies are tyre subassemblies differing from each other in at least the axially measured width of both their rims (12) and tyres (13), and the greater width tyre subassembly has a width substantially greater than the corresponding width of the wheel assemblies (5) of said first set of wheel assemblies.

10. A set of conveyor rollers according to claim 8, characterised in that said corresponding first and second subassemblies are tyre subassemblies different from each other at least in that said first set of tyre subassemblies have rims (12) comprising a single diameter tube and said second set of tyre subassemblies have rims (12") that extend axially outwardly away from their associated tyres (13") and then radially outwardly to an annular guide portion (14) that extends radially outwardly beyond said tyres (13") for guiding the edges of articles supported on said tyres (13").

11. A set of conveyor rollers according to claim 8, characterised in that said corresponding first and second set of subassemblies are tyre subassemblies differing in at least the elastomeric characteristics of their tyres (13).

12. A set of conveyor rollers according to claim 11, characterised in that the difference in elastomeric characteristics relates to a difference in hysteresis properties of the elastomeric tyres (13).

13. A set of conveyor rollers according to claim 8, characterised in that said corresponding first and second subassemblies are wheel subassemblies (5) differing in bearing structure.

FIG. 1

FIG. 2

FIG. 7

FIG. 3

FIG. 4

FIG. 5

FIG. 6